# EUROPÄISCHE PATENTANMELDUNG

(11) **EP 4 813 189 A1**
(43) Veröffentlichungstag der Anmeldung: **30.09.2026**
(21) Anmeldenummer: 26166817.2
(22) Anmeldetag: 23.03.2026
(51) Int. Cl.: A01C 7/04

(54) **ROTATIONSKÖRPER FÜR EINE VEREINZELUNGSVORRICHTUNG EINER SÄMASCHINE**

(30) Priorität: 24.03.2025 DE 102025111327
(71) Anmelder: Lemken GmbH & Co KG, 46519 Alpen (DE)
(72) Erfinder: Landscheidt, Martin, 46519 Alpen (DE); Nepicks, Franz Christof, 47665 Sonsbeck (DE); Strauß, Marion, 46499 Hamminkeln (DE); Beltz, Maja, 46509 Xanten (DE); A Campo, Julius Benedikt, 41334 Nettetal-Lobberich (DE)

(57) **Zusammenfassung**

Die vorliegende Erfindung betrifft einen Rotationskörper zur Vereinzelung von Saatgut für eine Vereinzelungsvorrichtung (1) einer pneumatischen Sämaschine, wobei der Rotationskörper (5) eine Trommel (8) und eine lösbar an der Trommel angeordnete Säscheibe (7) umfasst, und um eine Drehachse drehbar in einem Gehäuse (2) der Vereinzelungsvorrichtung lagerbar ist. Gemäß der Erfindung ist die Säscheibe in einem montierten Zustand mittels mindestens einer Verbindungseinrichtung (14) kraftschlüssig und/oder formschlüssig mit der Trommel verbunden.

## Beschreibung

Die vorliegende Erfindung betrifft einen Rotationskörper für eine Vereinzelungsvorrichtung einer pneumatischen Sämaschine, insbesondere einer Einzelkornsämaschine.

Zur Aussaat von Saatgut, welches einzeln und üblicherweise in Reihen abgelegt werden soll, kommen pneumatische Sämaschinen, insbesondere pneumatische Einzelkornsämaschinen, zum Einsatz. Derartige Einzelkornsämaschinen weisen üblicherweise je anzulegender Reihe eine Vereinzelungsvorrichtung auf, in welcher das Saatgut vereinzelt und zur Ablage im Boden abgegeben werden kann. Zur Vereinzelung wird hierbei üblicherweise ein Differenzdruck genutzt, welcher über ein rotierendes Element, beispielsweise eine Säscheibe und/oder Trommel, wirkt.

Eine gattungsgemäße Vereinzelungsvorrichtung für eine pneumatische Einzelkornsämaschine ist aus der EP 0 193 833 A1 bekannt. Eine Vereinzelung des Saatgutes in der Vereinzelungsvorrichtung erfolgt dabei mittels einer rotierenden Säscheibe innerhalb der Vereinzelungsvorrichtung, welche entlang ihres Umfangs eine Reihe von Öffnungen aufweist. Auf die beiden Seiten der rotierenden Säscheibe wirken dabei unterschiedliche Luftdrücke, so dass Saatgut an den Öffnungen der Säscheibe festgehalten und dadurch vereinzelt werden kann. Eine Position der Säscheibe in axialer Richtung kann dabei verändert werden, um beispielsweise eine zuverlässige Funktion der Vereinzelung sicherzustellen. Zudem können für unterschiedliche Saatgüter aufgrund der unterschiedlichen Saatgutgrößen auch unterschiedliche Säscheiben verwendet werden. Zum Austausch und Einstellen der Säscheiben muss die jeweilige Vereinzelungsvorrichtung geöffnet werden.

Zwischen der rotierenden Säscheibe und dem Gehäuse ist ein Ringspalt ausgebildet. Der Ringspalt sollte derart eingestellt sein, dass im Betrieb kein Saatgut hindurchgelangen kann, so dass dieser möglichst gering sein sollte. Um einen möglichst engen Ringspalt einstellen zu können, sollte eine Säscheibe möglichst eben ausgebildet sein, um im Betrieb bei den dann wirkenden Drücken nicht an das Gehäuse zu stoßen bzw. zu schleifen. Um die notwendige Steifigkeit zu erreichen, weisen Säscheiben oftmals eine ausgeprägte Rippenstruktur oder ähnliche in axialer Richtung ausgebildete Strukturen auf. Dieses hat jedoch neben der höheren Verschmutzungsanfälligkeit den Nachteil, dass für die je nach Saatgut unterschiedlichen Säscheiben relativ viel Stauraum benötigt wird.

Es ist daher die Aufgabe der vorliegenden Erfindung einen Rotationskörper für eine Vereinzelungsvorrichtung einer pneumatischen Sämaschine anzugeben, welche neben einer zuverlässigen Saatgutvereinzelung eine geringere Verschmutzungsanfälligkeit sowie einen verringerten Bauraum ermöglicht.

Die Aufgabe wird gelöst durch einen Rotationskörper gemäß den Merkmalen des Anspruches 1. Vorteilhafte Ausgestaltungen der Erfindung sind in den Unteransprüchen angegeben.

Vorgesehen ist ein Rotationskörper zur Vereinzelung von Saatgut für eine Vereinzelungsvorrichtung einer pneumatischen Sämaschine, wobei der Rotationskörper eine Trommel und eine lösbar an der Trommel angeordnete Säscheibe umfasst, und um eine Drehachse drehbar in einem Gehäuse der Vereinzelungsvorrichtung lagerbar ist. Gemäß der Erfindung ist die Säscheibe in einem montierten Zustand mittels mindestens einer Verbindungseinrichtung kraft- und/oder formschlüssig mit der Trommel verbunden.

Der Rotationskörper kann in einem Gehäuse einer Vereinzelungsvorrichtung drehbar um eine Drehachse zur Vereinzelung von Saatgut gelagert sein, wobei der Rotationskörper insbesondere an einem feststehenden Grundkörper des Gehäuses mittels mindestens eines Lagerelementes drehbar gelagert sein kann. Der Rotationskörper weist eine Trommel auf, welche im Wesentlichen rotationssymmetrisch um die Drehachse ausgebildet ist. Die Trommel kann eine zumindest teilweise zylindrische und/oder konische Form aufweisen. Dabei weist die Trommel ein säscheibenseitiges erstes Ende und ein, insbesondere lagerelementseitiges, zweites Ende mit einer sich dazwischen erstreckenden Mantelfläche auf.

Das säherzseitige erste Ende kann dabei im Wesentlichen unverschlossen sein, und nur durch die Mantelfläche gebildet sein. Das zweite Ende kann zumindest teilweise geschlossen ausgebildet und zur Aufnahme von Lagerelementen ausgebildet sein. Auf einer Außenseite der Trommel, insbesondere der Mantelfläche, kann eine Antriebsprofilierung, beispielsweise in Form einer Verzahnung bzw. eines Zahnkranzes, angeordnet sein. Mit der Antriebsprofilierung kann ein Antriebs zusammenwirken, um eine Drehbewegung der Trommel zu bewirken. Zur Vereinzelung von Saatgut kann die Säscheibe eine Mehrzahl an Öffnungen aufweisen, welche radial außenseitig, entlang eines Randes der Säscheibe angeordnet sein können. Die Öffnungen verbinden dabei beide Seiten der Säscheibe fluiddurchlässig.

Die Öffnungen können mindestens in einer kreisförmigen Reihe oder in mehreren, in radialer Richtung zueinander beabstandeten, Reihen auf der Säscheibe angeordnet sein. Im Betrieb der pneumatischen Sämaschine wirkt über die Säscheibe und den Öffnungen eine Druckdifferenz, durch welche Saatgut an den Öffnungen zur Vereinzelung anhaften kann. Die Säscheibe kann eine im Wesentlichen ebene und rippenfreie Form aufweisen.

In einem montierten Zustand der Säscheibe kann diese mittels mindestens einer Verbindungseinrichtung kraftschlüssig und/oder formschlüssig mit, insbesondere einem ersten Ende, der Trommel, insbesondere radial außenseitig, verbunden sein. Die Verbindungseinrichtung kann derart ausgestaltet und angeordnet sein, dass in einem montierten Zustand die Säscheibe kraftschlüssig und/oder formschlüssig an der Trommel angeordnet sein kann. Hierbei können ein oder mehrere Verbindungseinrichtungen an der Trommel und/oder der Säscheibe oder zwischen Trommel und Säscheibe angeordnet sein. Eine Verbindungseinrichtung kann dabei rein kraftschlüssig oder formschlüssig wirken, oder mittels einer kraftschlüssigen und formschlüssigen Verbindung.

Durch die mindestens eine Verbindungseinrichtung kann die Säscheibe radial außenseitig mit, insbesondere der Mantelfläche, der Trommel lösbar verbunden werden. Dies hat den Vorteil, dass die Säscheibe durch die Trommel gespannt und in Form gezogen werden kann, wodurch die Säscheibe eine Ebenheit der Trommel annehmen kann. Dies bietet den Vorteil, dass die Säscheibe im Wesentlichen rippenfrei, ohne aussteifende Rippen, ausgestaltet werden kann. Zudem ermöglicht dies eine geringe Dicke der Säscheibe in axialer Richtung, wodurch der benötigte Bauraum in der Vereinzelung verringert werden kann. Weiterhin benötigen in axialer Richtung flachere Säscheiben weniger Stauraum, um beispielsweise Säscheiben für unterschiedliches Saatgut zu verstauen, und können kostengünstiger hergestellt werden als Säscheiben mit ausgeprägten Rippenstrukturen. Durch die radial außenseitige Verbindung der Säscheibe mit der Trommel kann im Betrieb eine besonders ebene Säscheibe ermöglicht werden. Hierdurch kann ein saatgutundurchlässiger Ringspalt zwischen der im Betrieb rotierenden Säscheibe und der Innenseite des Gehäuses verringert werden, ohne dass es zu einem unerwünschten Kontakt zwischen Säscheibe und Rotationskörper bzw. Säscheibe kommen kann. Dies hat den Vorteil, dass weniger Luft durch den Ringspalt entweichen kann und zudem die Qualität der Saatgutvereinzelung verbessert werden kann.

In einer vorteilhaften Ausgestaltung ist die Verbindungseinrichtung derart ausgestaltet und angeordnet, dass eine kraftschlüssige und/oder formschlüssige Anordnung der Säscheibe an der Trommel mittels einer translatorischen und/oder rotatorischen Bewegung der Säscheibe erfolgt. Die Anordnung der Säscheibe kann dabei mittels einer rein translatorischen oder rotatorischen Bewegung erfolgen, beispielsweise mittels einer als formschlüssigen und/oder kraftschlüssigen Steckverbindung ausgestalteten Verbindungseinrichtung. Eine translatorische und rotatorische Bewegung kann beispielsweise durch eine als Gewinde oder als Bajonettverschluss ausgebildete Verbindungseinrichtung ermöglicht werden. Dies hat den Vorteil einer einfachen, insbesondere werkzeugfreien, Montage bzw. Demontage der Säscheibe an der Trommel.

In einer besonders bevorzugten Ausgestaltung weist die mindestens eine Verbindungseinrichtung ein Verbindungselement und eine, insbesondere entsprechend ausgestaltete, Aufnahme für das Verbindungselement auf, wobei die Verbindungseinrichtung zumindest teilweise, insbesondere umfangsseitig, insbesondere innenseitig und/oder außenseitig, an der Trommel und/oder der Säscheibe angeordnet und ausgebildet ist. Eine einzelne Verbindungseinrichtung kann entlang des Umgangs der Trommel und/oder der Säscheibe ausgebildet, beispielsweise in Form eines Innengewindes und/oder Außengewindes. Mehrere Verbindungseinrichtungen können entlang des Umfangs der Trommel und/oder der Säscheibe, insbesondere gleichmäßig, verteilt angeordnet sein. In einem montierten Zustand des Rotationskörpers kann die Aufnahme ein Verbindungselement kraftschlüssig und/oder formschlüssig aufnehmen. Ein Verbindungselement und die zugeordnete Aufnahme können komplementär zum Zusammenwirken ausgebildet sein, beispielsweise kann eine Verbindungseinrichtung in Form eines Gewindes in Form eines Innengewindes und eines Außengewindes ausgebildet sein, wobei ein Teil an der Trommel und ein Teil an der Säscheibe angeordnet sein kann. Eine Verbindungseinrichtung kann auch in Form eines Steckers oder Klips ausgebildet sein, welcher in einer entsprechenden Aufnahme an dem jeweils anderen Bauteil, Trommel oder Säscheibe, kraftschlüssig und/oder formschlüssig aufgenommen werden kann. Durch die Verbindungseinrichtung kann eine radial außenseitige Befestigung der Säscheibe an der Trommel erfolgen, wodurch die Säscheibe eine ebene Form annehmen kann, ohne zusätzliche Rippen zur Aussteifung zu benötigen.

Vorzugsweise weist das Verbindungselement einen Führungsabschnitt und/oder ein Arretierelement auf. Ein Führungsabschnitt des Verbindungselementes kann in Form einer Rundung oder einer Leitfläche ausgebildet sein, wodurch eine Aufnahme des Verbindungselementes in der zugeordneten Aufnahme verbessert werden kann. Ein Arretierelement kann an dem Verbindungselement und/oder in der Aufnahme angeordnet sein, beispielsweise in Form eines elastischen Elementes, welches in einem montierten Zustand des Rotationskörpers formschlüssig und/oder kraftschlüssig in der Aufnahme angeordnet ist. Zur Aufnahme eines Arretierelementes kann eine Aufnahme beispielsweise eine Arretierelementaufnahme, beispielsweise in Form einer Ausbuchtung, einer Vertiefung, einer Nut oder einer Kerbe, aufweisen. Hierdurch kann der Halt der montierten Verbindungseinrichtung gegen unbeabsichtigtes Lösen der Säscheibe im Betrieb verbessert werden.

Besonders bevorzugt weist die Säscheibe radial außenseitig, insbesondere entlang zumindest eines Teils des Umfangs, eine Auskragung auf, wobei insbesondere an der Auskragung zumindest teilweise eine Verbindungseinrichtung ausgebildet ist. Die Auskragung kann trommelseitig an der Säscheibe angeordnet sein und sich in eine axiale Richtung erstrecken. Die Auskragung kann dabei radial außenseitig, insbesondere randseitig, beispielsweise benachbart und im Wesentlichen parallel zum Rand der Säscheibe, ausgebildet sein. An der Auskragung kann innenseitig und/oder außenseitig zumindest ein Teil einer Verbindungseinrichtung, beispielsweise ein Verbindungselement oder eine Aufnahme für ein Verbindungselement, angeordnet sein. Die Auskragung kann eine Aussteifung der Säscheibe besonders randseitig bewirken, wodurch ein geringerer Ringspalt zwischen Säscheibe und Gehäuse, insbesondere feststehendem Grundgehäuse, einstellbar ist und eine Saatgutablage, insbesondere von feinem Saatgut, verbessert werden kann. Hierdurch kann ein unerwünschter Austritt von Saatgut aus dem Saatgutbereich oder eine Beschädigung von Saatgut vermieden werden.

Vorzugsweise ist die Säscheibe derart ausgebildet, dass in einem montierten Zustand die Säscheibe die Trommel, insbesondere an der Mantelfläche, zumindest teilweise überlappt. In diesem Überlappungsbereich können ein oder mehrere Verbindungselemente an der Trommel, insbesondere deren Mantelfläche, und einer die Mantelfläche überlappenden Auskragung der Säscheibe angeordnet sein. Dies bietet den Vorteil, dass eine Befestigung der Säscheibe an der Trommel verbessert werden kann und die Säscheibe zuverlässig in einer ebenen Form gehalten werden kann.

Vorzugsweise ist die Säscheibe einstückig oder mehrteilig ausgebildet, insbesondere aus einem oder mehreren unterschiedlichen Materialien. Die Säscheibe kann einstückig aus einem weicheren Material, beispielsweise Kunststoff, als die Trommel ausgebildet sein, wobei durch die Verbindungseinrichtung die im Wesentlichen rippenfreie Säscheibe in einem montierten Zustand eine ebene Form annehmen kann. Denkbar ist auch eine aus zwei Komponenten zusammengesetzte oder durch Spritzguss hergestellte Säscheibe. Eine Säscheibe kann randseitig umlaufend ein angebautes oder angeformtes Dichtelement aufweisen, zum Zusammenwirken mit der Trommel. Eine Säscheibe aus einem weicheren Material als die Trommel hat den Vorteil, dass in einem montierten Zustand die Säscheibe durch die Trommel flachgezogen bzw. in eine ebene Form gezogen werden kann. Ein weiterer Vorteil ist, dass ein eventuell auftretender Verschleiß an der Säscheibe und nicht an der Trommel auftreten kann.

In einer bevorzugten Ausgestaltung ist die Trommel einstückig oder mehrteilig ausgebildet, insbesondere aus einem oder mehreren unterschiedlichen Materialien. Die Trommel kann aus einem härteren Werkstoff als die Säscheibe, beispielsweise Metall, gefertigt sein. Hierdurch kann die Trommel eine höhere Steifigkeit aufweisen als die Säscheibe, wodurch die Säscheibe in einem montierten Zustand durch die steifere Trommel in eine ebene Form gebracht werden kann. Die Trommel kann aus unterschiedlichen Materialien mit unterschiedlichen Steifigkeiten und/oder Materialeigenschaften bestehen. Die Trommel kann in axialer Richtung stirnseitig an einem ersten Ende an der Mantelfläche ein ringförmiges Dichtelement aufweisen.

Vorzugsweise weist die Trommel und/oder die Säscheibe zumindest eine Werkzeugaufnahme zum Lösen und/oder Befestigen der Säscheibe auf. Die Werkzugaufnahme kann in Form einer Mulde oder Ausbuchtung ausgestaltet sein, welche zur Aufnahme eines Werkzeuges ausgebildet ist. Ein aufzunehmendes Werkzeug kann beispielsweise ein Schraubenschlüssel, ein Stab oder ein Zollstock sein. Die Werkzeugaufnahme kann in einem Griffbereich zum manuellen Handhaben der Säscheibe angeordnet sein. Durch die Werkzeugaufnahmen kann bei einer Montage und/oder Demontage der Säscheibe eine höhere Hebelkraft bzw. ein höheres Moment aufgebracht werden.

Weiterhin betrifft die Erfindung ein landwirtschaftliches Arbeitsgerät, insbesondere pneumatische Sämaschine, mit mindestens einer Vereinzelungsvorrichtung mit einem wie vorstehend ausgebildeten Rotationskörper, wobei das Arbeitsgerät ein Gehäuse aufweist, welches einen Grundkörper und ein relativ zum Grundkörper lösbares und/oder verschwenkbares Abdeckelement aufweist, wobei der Rotationskörper zur Vereinzelung von Saatgut innerhalb des Gehäuses und relativ zu diesem um eine Drehachse drehbar gelagert ist. Innerhalb des, insbesondere vollständig, geschlossenen Gehäuses kann zur Vereinzelung des Saatgutes ein zweiter Druckbereich erzeugt werden, welcher einen höheren Druck aufweist, als ein erster Druckbereich innerhalb des Rotationskörpers. Hierbei wird eine Druckdifferenz über die Säscheibe erzeugt, entweder durch Unterdruck in dem ersten Bereich oder durch einen Überdruck in dem zweiten Bereich, um das Saatgut mittels der drehenden Säscheibe und ihren Öffnungen zu vereinzeln. Der Rotationskörper kann dabei an dem drehfest gelagerten Grundkörper des Gehäuses drehbar gelagert sein. Über ein relativ zum Grundkörper verschwenkbares Abdeckelement kann der Rotationskörper, insbesondere dessen Säscheibe, zugänglich sein, beispielsweise um eine andere Säscheibe für ein anderes Saatgut zu montieren. Der erfindungsgemäße Rotationskörper bietet dabei den Vorteil, dass die Säscheiben dünner und im Wesentlichen rippenfrei ausgestaltet werden können und aufgrund der mindestens einen Verbindungseinrichtung durch die Trommel in eine ebene Form für eine verbesserte Vereinzelung gebracht werden können.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine Vereinzelungsvorrichtung mit einem Rotationskörper;
- Fig. 2:: einen Rotationskörpers mit einer Trommel und einer Säscheibe;
- Fig. 3:: eine Detailansicht des in Fig. 2 gezeigten Rotationskörpers mit einer Verbindungseinrichtung; und
- Fig. 4:: eine Schnittansicht einer Verbindungseinrichtung in einem montierten Zustand.

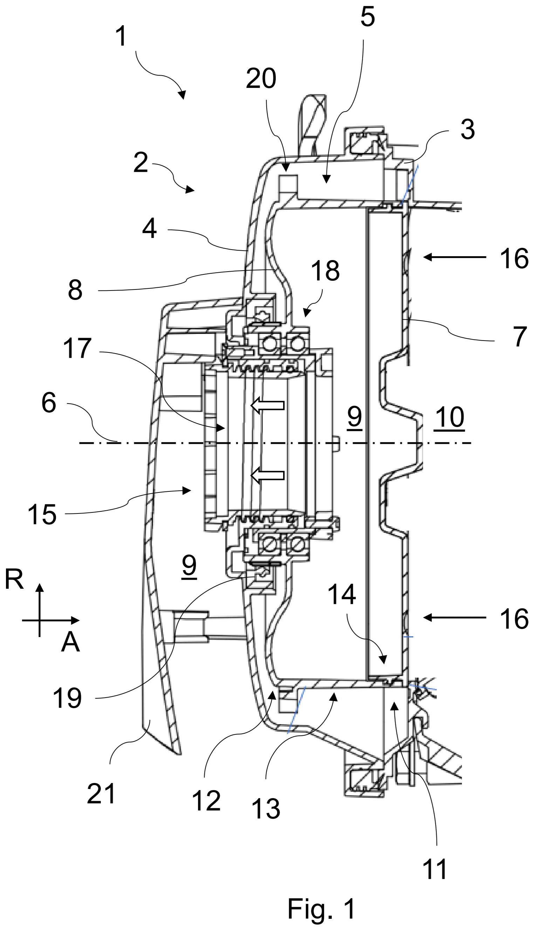

Figur 1 zeigt eine schematische Ansicht einer Vereinzelungsvorrichtung 1 für ein landwirtschaftliches Arbeitsgerät in Form einer pneumatischen Sämaschine bzw. einer Einzelkornsämaschine mit einem Rotationskörper 5 zur Vereinzelung von Saatgut. Zum Ausbringen von zu vereinzelndem Saatgut wird üblicherweise eine Vereinzelungsvorrichtung 1 pro Saatgutreihe eingesetzt, wodurch je nach Arbeitsbreite des Arbeitsgerätes eine Mehrzahl an Vereinzelungsvorrichtungen 1 nebeneinander an einem Arbeitsgerät angeordnet sind.

Die Vereinzelungsvorrichtung 1 weist ein Gehäuse 2 auf, welches einen Grundkörper 3 und ein relativ zum Grundkörper 3 lösbares und/oder verschwenkbares Abdeckelement 4 aufweist. Der Grundkörper 3 kann mit einem Rahmen (nicht dargestellt) drehfest verbunden werden. Innerhalb des Gehäuses 2 ist ein Rotationskörper 5 angeordnet, welcher relativ zu dem Gehäuse 2 um eine Drehachse 6 drehbar zur Vereinzelung von Saatgut (nicht dargestellt) gelagert ist. Der Rotationskörper 5 umfasst eine Trommel 8 und eine stirnseitig an dieser lösbar angeordnete Säscheibe 7. Radial außenseitig weist der Rotationskörper 5 ein Antriebsprofil 20 in Form eines Zahnkranzes auf, welches mit einem Antrieb (nicht dargestellt) zum Drehen des Rotationskörpers 5 um die Drehachse 6 zusammenwirken kann.

Der Rotationskörper 5 bildet einen ersten Bereich 9 aus, wobei außerhalb des Rotationskörpers 5 und zumindest teilweise innerhalb des Gehäuses 2 ein zweiter Bereich 10 ausgebildet ist. Innerhalb des zweiten Bereiches 10 wirkt ein höherer Luftdruck als innerhalb des ersten Bereiches 9, wobei der erste Bereich 9 fluidisch mit der Umgebung verbunden sein kann. Die Druckdifferenz zwischen dem ersten und zweiten Bereich 9, 10 wirkt auch über die Säscheibe 7. Die Säscheibe 7 weist entlang ihres Randes radial außenseitig eine Mehrzahl an Öffnungen 16 auf, welche beide Seiten der Säscheibe 7 fluiddurchlässig verbinden. An den Öffnungen 16 haftet aufgrund der wirkenden Druckdifferenz Saatgut (nicht dargestellt) in dem zweiten Bereich 10 an und wird durch die Drehbewegung der Säscheibe 7 mitgenommen, wodurch das Saatgut vereinzelt werden kann. Der Rotationskörper 5 ist innerhalb des Gehäuses 2 mittels einer Verstellvorrichtung 15 gegenüber dem Gehäuse 2 in axialer Richtung A entlang der Drehachse 6 verlagerbar. Die Luft aus dem zweiten Bereich 10 strömt zumindest teilweise durch die Öffnungen 16 der Säscheibe 7 in den ersten Bereich 9 und gelangt durch eine Öffnung 17 eines Stellelementes 11 der Verstellvorrichtung 15 in die Umgebung. Durch ein zwischen Trommel 8 und Gehäuse 2 angeordnetes Dichtelement 19 wird ein ungewünschter Austritt von Luft aus dem zweiten Bereich 10 in den ersten Bereich 9 verhindert. Die durch die Öffnung 17 austretende Luft wird durch eine Abdeckung 21 des Gehäuses 2, welche außenseitig an dem Abdeckelement 4 angeordnet ist, in Richtung des Bodens geleitet.

Gemäß der Erfindung ist die Säscheibe 7 in einem montierten Zustand mittels mindestens einer Verbindungseinrichtung 14 kraftschlüssig und/oder formschlüssig mit der Trommel 8 verbunden. Die Säscheibe 7 ist dabei an einem ersten Ende 11 der Trommel 8 angeordnet, welches im Wesentlichen offen ist. Über eine Mantelfläche 13 ist das erste Ende 11 der Trommel 8 mit einem zweiten Ende 12 der Trommel 8 verbunden. Das zweite Ende 12 ist im Wesentlichen geschlossen, bis auf eine Öffnung 17, durch welche Luft aus dem ersten Bereich 9 in die Umgebung austreten kann. Das zweite Ende 12 ist zudem derart ausgestaltet, dass ein Lagerelement 18 außenseitig an der Trommel 8 zur drehbaren Lagerung an dem Gehäuse 2 angeordnet werden kann.

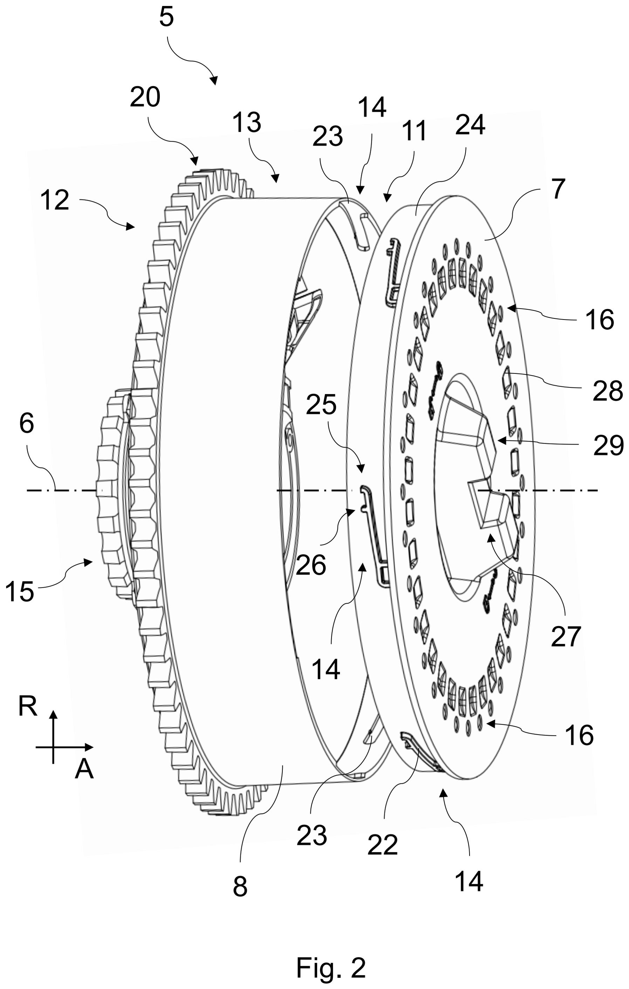

In Figur 2 ist der Rotationskörper 5 mit Trommel 8 und Säscheibe 7 dargestellt, wobei die Säscheibe 7 beabstandet zu der Trommel 8 dargestellt ist, um die Verbindungeinrichtungen 14 besser darstellen zu können. Eine Verbindungseinrichtung 14 weist jeweils ein Verbindungselement 22 und eine entsprechende Aufnahme 23 auf. Die Verbindungseinrichtungen 14 sind gleichmäßig entlang des Umfangs der Säscheibe 7 bzw. der Trommel 8 verteilt. Dies hat den Vorteil, dass die Säscheibe 7 randseitig an der Trommel 8 bzw. deren Mantelfläche 13 befestigt werden kann und die im Wesentlichen rippenfreie Säscheibe 7 in eine gleichmäßig ebene Form gebracht werden kann.

An dem ersten Ende 11 der Trommel 8 sind in deren Mantelfläche 13 innenseitig die Aufnahmen 23 der Verbindungseinrichtungen 14 zur Aufnahme der säscheibenseitigen Verbindungselemente 22 in Form von Vertiefungen ausgebildet. Die Säscheibe 7 weist trommelseitig eine Auskragung 24 auf, welche sich in axialer Richtung A erstreckt. Die Auskragung 24 ist randseitig der Säscheibe 7 umlaufend angeordnet. Die Auskragung 24 erhöht die Steifigkeit der Säscheibe 7 besonders im Randbereich. In radialer Richtung R sind außenseitig an der Auskragung 24 die Verbindungselemente 22 der Verbindungseinrichtungen 14 angeordnet.

Die Verbindungselemente 14 sind einstückig mit der Säscheibe 7 bzw. der Auskragung 24 ausgebildet. Die Verbindungselemente 22 ragen nach radial außen aus der Auskragung 24 hervor und sind in Form von im Wesentlichen diagonal verlaufenden Stegen ausgebildet. Die zugeordneten Aufnahmen 23 sind derart ausgestaltet, dass die Verbindungselemente 22 mit einer zunächst translatorischen Bewegung in axialer Richtung A und einer anschließenden Drehbewegung kraftschlüssig und/oder formschlüssig mit den Aufnahmen 23 verbindbar sind, um die Säscheibe 7 an der Trommel 8 zu befestigen. Die gezeigten Verbindungseinrichtungen 14 bilden einen Bajonettverschluss, mit dem die Säscheibe 7 lösbar an der Trommel 8 angeordnet werden kann.

An der Säscheibe 7 ist an einer der Trommel 8 abgewandten Seite ein Griffbereich 29 ausgebildet, welcher eine Handhabung der Säscheibe 7 erleichtern kann. In dem Griffbereich 29 ist zudem eine Werkzeugaufnahme 28 in Form einer Aussparung angeordnet, welche das Einsetzen eines üblicherweise vorhandenen Werkzeuges zum Festziehen oder Lösen der Säscheibe 7 ermöglicht. Als Werkzeug kann beispielsweise ein Schraubenschlüssel oder ein Zollstock verwendet werden. Auf der der Trommel 8 abgewandten Seite der Säscheibe 7 sind benachbart zu den Öffnungen 16 zur Aufnahmen von einzelnen Saatgutkörnern Mulden 28 angeordnet, welche einer besseren Vereinzelung des Saatgutes dienen.

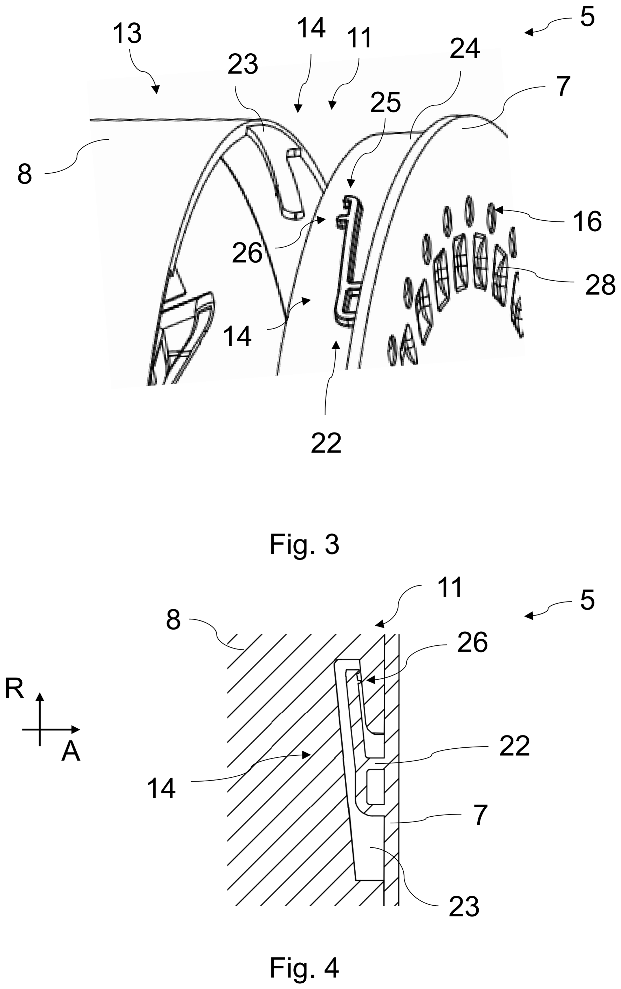

Um eine Montage der Säscheibe 7 zu erleichtern, weisen die Verbindungselemente 22 an einem freien Ende jeweils einen Führungsabschnitt 25 in Form einer Krümmung auf (Fig. 3). Zusätzlich sind an den Verbindungselementen 22 trommelseitig Arretierelemente 26 angeordnet, welche in Form von kurzen, insbesondere elastischen, Stäben ausgebildet sind. In einem montierten Zustand werden die Arretierelemente 26 in axialer Richtung gegen eine Wandung der zugehörigen Aufnahme 23 gepresst, wodurch ein ungewolltes Lösen der Verbindungseinrichtung 14 verhindert werden kann.

In Fig. 4 ist eine Verbindungseinrichtung 14 eines Rotationskörpers 5 in einem montierten Zustand dargestellt. Die Säscheibe 7 liegt bündig an dem ersten Ende 11 der Trommel 8 an und das Vereinzelungselement 22 der Verbindungseinrichtung 14 ist kraftschlüssig und/oder formschlüssig in der Aufnahme 23 angeordnet. Die gezeigte Verbindungseinrichtung 14 ist in Form eines Bajonettverschlusses ausgebildet. Das Verbindungselement 14 weist ein Arretierelement 26 auf, welches seitlich in axialer Richtung A an eine Wandung der Aufnahme 23 gepresst ist.

### Bezugszeichen

| | | | |
|---|---|---|---|
| 1 | Vereinzelungsvorrichtung | 24 | Auskragung |
| 2 | Gehäuse | 25 | Führungsabschnitt |
| 3 | Grundkörper | 26 | Arretierelement |
| 4 | Abdeckelement | 27 | Werkzeugaufnahme |
| 5 | Rotationskörper | 28 | Mulde |
| 6 | Drehachse | 29 | Griffbereich |
| 7 | Säscheibe | | |
| 8 | Trommel | | |
| 9 | Erster Bereich | | |
| 10 | Zweiter Bereich | | |
| 11 | Erstes Ende | | |
| 12 | Zweites Ende | | |
| 13 | Mantelfläche | | |
| 14 | Verbindungseinrichtung | | |
| 15 | Verstellvorrichtung | | |
| 16 | Öffnung Säscheibe | A | Axiale Richtung |
| 17 | Öffnung Stellelement | R | Radiale Richtung |
| 18 | Lagerelement | | |
| 19 | Dichtelement | | |
| 20 | Antriebsprofil | | |
| 21 | Abdeckung | | |
| 22 | Verbindungselement | | |
| 23 | Aufnahme | | |

## Patentansprüche

1. Rotationskörper zur Vereinzelung von Saatgut für eine Vereinzelungsvorrichtung (1) einer pneumatischen Sämaschine, wobei der Rotationskörper (5) eine Trommel (8) und eine lösbar an der Trommel (8) angeordnete Säscheibe (7) umfasst, und um eine Drehachse (6) drehbar in einem Gehäuse (2) der Vereinzelungsvorrichtung (1) lagerbar ist, **dadurch gekennzeichnet, dass** die Säscheibe (7) in einem montierten Zustand mittels mindestens einer Verbindungseinrichtung (14) kraftschlüssig und/oder formschlüssig mit der Trommel (8) verbunden ist.

2. Rotationskörper nach Anspruch 1, **dadurch gekennzeichnet, dass** die Verbindungseinrichtung (14) derart ausgestaltet und angeordnet ist, dass eine kraftschlüssig und/oder formschlüssige Anordnung der Säscheibe (7) an der Trommel (8) mittels einer translatorischen und/oder rotatorischen Bewegung der Säscheibe (7) erfolgt.

3. Rotationskörper nach Anspruch 1 oder 2, **dadurch gekennzeichnet, dass** die mindestens eine Verbindungseinrichtung (14) ein Verbindungselement (22) und eine Aufnahme (23) für das Verbindungselement (22) aufweist, wobei die Verbindungseinrichtung (14) zumindest teilweise, insbesondere umfangsseitig, an der Trommel (8) und/oder der Säscheibe (7) angeordnet und ausgebildet ist.

4. Rotationskörper nach einem der vorherigen Ansprüche, **dadurch gekennzeichnet, dass** das Verbindungselement (22) einen Führungsabschnitt (25) und/oder ein Arretierelement (26) aufweist.

5. Rotationskörper nach einem der vorherigen Ansprüche, **dadurch gekennzeichnet, dass** die Säscheibe (7) radial außenseitig, insbesondere entlang zumindest eines Teils des Umfangs, eine Auskragung (24) aufweist, wobei insbesondere an der Auskragung (24) zumindest teilweise eine Verbindungseinrichtung (14) ausgebildet ist.

6. Rotationskörper nach einem der vorherigen Ansprüche, **dadurch gekennzeichnet, dass** die Säscheibe (7) derart ausgebildet ist, dass in einem montierten Zustand die Säscheibe (7) die Trommel (8), insbesondere an der Mantelfläche (13), zumindest teilweise überlappt.

7. Rotationskörper nach einem der vorherigen Ansprüche, **dadurch gekennzeichnet, dass** die Säscheibe (7) einstückig oder mehrteilig, insbesondere aus einem oder unterschiedlichen Materialien, ausgebildet ist.

8. Rotationskörper nach einem der vorherigen Ansprüche, **dadurch gekennzeichnet, dass** die Trommel (8) einstückig oder mehrteilig, insbesondere aus einem oder mehreren unterschiedlichen Materialien, ausgebildet ist.

9. Rotationskörper nach einem der vorherigen Ansprüche, **dadurch gekennzeichnet, dass** die Trommel (8) und/oder die Säscheibe (7) zumindest eine Werkzeugaufnahme (27) zum Lösen und/oder Befestigen der Säscheibe (7) aufweist.

10. Landwirtschaftliches Arbeitsgerät, insbesondere pneumatische Sämaschine, mit mindestens einer Vereinzelungsvorrichtung (1) mit einem Rotationskörper (5) nach einem der Ansprüche 1 bis 9, wobei das Arbeitsgerät ein Gehäuse (2) aufweist, welches einen Grundkörper (3) und ein relativ zum Grundkörper (3) lösbares und/oder verschwenkbares Abdeckelement (4) aufweist, wobei der Rotationskörper (5) zur Vereinzelung von Saatgut innerhalb des Gehäuses (2) und relativ zu diesem um eine Drehachse (6) drehbar gelagert ist.
